# EUROPÄISCHE PATENTSCHRIFT

(11) **EP 3 766 396 B1**
(45) Veröffentlichungstag und Bekanntmachung des Hinweises auf die Patenterteilung: **23.02.2022**
(21) Anmeldenummer: 19187020.3
(22) Anmeldetag: 18.07.2019
(51) Int. Cl.: A47K 3/17, F16B 5/02, E03F 5/04

(54) **STÜTZVORRICHTUNG**
SUPPORTING DEVICE
DISPOSITIF DE SUPPORT

(43) Veröffentlichungstag der Anmeldung: 20.01.2021
(73) Patentinhaber: Geberit International AG, 8645 Jona (CH)
(72) Erfinder: BÄNZIGER, David, 8636 Wald (CH)
(74) Vertreter: Frischknecht, Harry Ralph

(56) Entgegenhaltungen:
- DE-A1- 10 064 881

## Beschreibung

### TECHNISCHES GEBIET

Die vorliegende Erfindung betrifft eine Stützvorrichtung zur Einstellung der Höhe eines Duschelementes, insbesondere einer Duschwanne oder einer Duschfläche, nach dem Oberbegriff von Anspruch 1.

### STAND DER TECHNIK

Aus der EP 2 617 908 A1 ist eine Stützvorrichtung zur Einstellung der Höhe eines Duschelements bekannt geworden. Die Stützvorrichtung umfasst dabei in der Höhe einstellbare Fussteile, die jeweils zwei einstellbare Fussteile aufweisen. Die Höhe kann über die Drehung der Fussteile eingestellt werden. Nachteilig an der technischen Lehre der EP 2 617 908 A1 ist, dass es bei der Einstellung der Höhe aufgrund der Übertragung der Einstellbewegung auf andere Elemente zu einem unerwünschten Drehen von den Elementen kommt, welche für die Einstellbewegung nicht verdreht werden sollten. Das macht das Einstellen der Höhe für den Installateur mühsam.

Das Dokument DE 100 64 881 A1 offenbart eine Stützvorrichtung zur Einstellung der Höhe eines Duschelementes mit den Merkmalen des Oberbegriffs von Anspruch 1.

### DARSTELLUNG DER ERFINDUNG

Ausgehend von diesem Stand der Technik liegt der vorliegenden Erfindung eine Aufgabe zugrunde, eine Stützvorrichtung für die Einstellung der Höhe bzw. Lage eines Duschelementes, welche die Nachteile des Standes der Technik überwindet, anzugeben. Eine besonders bevorzugte Aufgabe ist es, eine Stützvorrichtung anzugeben, welche einfacher einstellbar ist.

Diese Aufgabe löst der Gegenstand von Anspruch 1. Demgemäss umfasst eine Stützvorrichtung für die Einstellung der Höhe bzw. Lage eines Duschelementes ein unteres Fussteil mit einer unteren Stützfläche, ein mittleres Fussteil mit einem Betätigungsabschnitt und ein oberes Fussteil mit einer oberen Stützfläche. Das untere Fussteil weist gegenüberliegend zur unteren Stützfläche ein unterer Gewindeabschnitt auf, welcher mit einem ersten Gewindeabschnitt des mittleren Fussteils im Eingriff ist. Das obere Fussteil weist gegenüberliegend zur oberen Stützfläche ein oberer Gewindeabschnitt auf, welcher mit einem zweiten Gewindeabschnitt des mittleren Fussteils im Eingriff ist. Das mittlere Fussteil ist über den Betätigungsabschnitt um seine Mittelachse entlang einer Einstellbewegung drehbar. Die Stützvorrichtung weist weiterhin ein Verdrehsicherungselement auf, welches drehfest und längsverschieblich mit dem unteren Fussteil in Kontakt steht und welches drehfest und längsverschieblich mit dem oberen Fussteil in Kontakt steht, derart, dass bei einer auf das mittlere Fussteil wirkenden Einstellbewegung über die genannten Gewindeabschnitte eine Längsverschiebung zwischen dem unteren Fussteil und dem oberen Fussteil entlang der Mittelachse (M) resultiert.

Durch die Anordnung des Verdrehsicherungselementes ergeht der Vorteil, dass bei einer Betätigung des mittleren Fussteils das obere und auch das untere Fussteil nicht verdreht werden. Hierdurch kann die Einstellung der Stützvorrichtung erleichtert werden.

Unter der Ausdrucksweise "Duschelement" wird eine Duschwanne, eine Badewanne, eine Duschfläche, etc. verstanden.

In Einbaulage gesehen steht die Stützvorrichtung mit der Stützfläche des unteren Fussteils auf dem Gebäudeboden auf und auf der Stützfläche des oberen Fussteils liegt das Duschelement oder ein Lagerprofil, auf welches das Duschelement zu liegen kommt. Eine umgekehrte Anordnung ist aber auch denkbar.

Besonders vorteilhaft ist die Stützvorrichtung, wenn das obere Fussteil bereits in Verbindung mit dem Duschelement oder einem Lagerprofil, auf welches das Duschelement zu liegen kommt, ist. Typischerweise ist dann die Stützvorrichtung bereits vergleichsweise fest im Raum angeordnet und die Einstellbewegung kann mit einer Hand einhändig ausgeführt werden. Ein separates Halten der Stützvorrichtung mit einer zweiten Hand ist nicht nötig.

Durch die Gewinde zwischen dem unteren Fussteil und dem mittleren Fussteil sowie zwischen dem oberen Fussteil und dem mittleren Fussteil resultiert bei Betätigung des mittleren Fussteils eine Relativbewegung des unteren Fussteils zum mittleren Fussteil und des oberen Fussteils zum mittleren Fussteil. Das heisst mit anderen Worten, dass das untere Fussteil und das obere Fussteil relativ zueinander verschoben, so dass die beiden zugeordneten Stützflächen sich ebenfalls relativ zueinander verschieben. Durch die relative Verschiebung der beiden Stützflächen zueinander kann die Höhe der Stützvorrichtung entsprechend angepasst werden.

Das Verdrehsicherungselement ist bevorzugt derart angeordnet, dass bei einer Einstellbewegung des mittleren Fussteils, keine Drehbewegung auf das untere Fussteil bzw. das obere Fussteil resultiert.

Vorzugsweise ist das Verdrehsicherungselement bezüglich einer Bewegung in Richtung der Mittelachse fest und bezüglich einer Bewegung um die Mittelachse bewegbar zum mittleren Fussteil befestigt, derart, dass sich das mittlere Fussteil um das feststehende Verdrehsicherungselement drehen kann.

Vorzugsweise weist jedes der Fussteile einen sich entlang der Mittelachse durch das jeweilige Fussteil hindurch erstreckenden Hohlraum auf, wobei sich das Verdrehsicherungselement vom Hohlraum des unteren Fussteils durch den Hohlraum des mittleren Fussteils in den Hohlraum des oberen Fussteils erstreckt.

Vorzugsweise ist jeder der Hohlräume durch eine mindestens teilweise zylindrisch ausgebildete Seitenwand umgeben, wobei die besagten Gewindeabschnitte an der Aussenseite bzw. an der dem Hohlraum zugewandten Innenseite der Seitenwand angeordnet sind.

Vorzugsweise ragt das untere Fussteil in den Hohlraum des mittleren Fussteils ein und das mittlere Fussteil ragt in den Hohlraum des oberen Fussteils ein. Es resultiert demnach eine teleskopartige Struktur, wobei die Fussteile ineinander hinein drehbar sind. Hierdurch können vergleichsweise grosse Einstellbereiche abgedeckt werden.

Vorzugsweise ist der Innendurchmesser des Hohlraums des oberen Fussteils grösser als der Aussendurchmesser des Hohlraums des mittleren Fussteils, so dass das mittlere Fussteil in den Hohlraum des oberen Fussteils bewegbar ist. Vorzugsweise ist der Innendurchmesser des Hohlraums des mittleren Fussteils grösser als der Aussendurchmesser des Hohlraums des unteren Fussteils, so dass das untere Fussteil in den Hohlraum des mittleren Fussteils bewegbar ist.

Vorzugsweise ist zwischen dem mittleren Fussteil und dem oberen Fussteil ein Zwischenraum vorhanden, in welchen das untere Fussteil einragt.

Vorzugsweise weist das untere Fussteil mindestens eine Längsführung auf, in welche ein Führungskamm des Verdrehsicherungselements derart eingreift, dass zwischen dem unteren Fussteil und dem Verdrehsicherungselement der drehfeste und längsverschiebliche Kontakt bereitstellbar ist.

Vorzugsweise weist das obere Fussteil mindestens eine Längsführung auf, in welche ein Führungskamm des Verdrehsicherungselements derart eingreift, dass zwischen dem oberen Fussteil und dem Verdrehsicherungselements der drehfeste und längsverschiebliche Kontakt bereitstellbar ist.

Vorzugsweise ist die mindestens eine Längsführung jeweils an bzw. in einer dem Hohlraum zugewandten Fläche der jeweiligen Fussteile angeordnet ist. Die Fläche ist dabei vorzugsweise Teil der oben genannten Seitenwand.

Vorzugsweise ist der untere Gewindeabschnitt des unteren Fussteils und der erste Gewindeabschnitt des mittleren Fussteils als ein zum oberen Gewindeabschnitt des oberen Fussteils und dem zweiten Gewindeabschnitt des mittleren Fussteils gegen gängiges Gewinde ausgebildet ist. In einer ersten Variante ist der untere Gewindeabschnitt und der erste Gewindeabschnitt als rechtsgängiges Gewinde und der obere Gewindeabschnitt und der zweite Gewindeabschnitt als linksgängiges Gewinde ausgebildet. In einer zweiten Variante ist der untere Gewindeabschnitt und der erste Gewindeabschnitt als linksgängiges Gewinde und der obere Gewindeabschnitt und der zweite Gewindeabschnitt als rechtsgängiges Gewinde ausgebildet.

Vorzugsweise erstrecken sich der erste Gewindeabschnitt und der zweite Gewindeabschnitt am mittleren Fussteil im Wesentlichen über die gesamte Höhe des mittleren Fussteils. Besonders bevorzugt sind der erste Gewindeabschnitt und der zweite Gewindeabschnitt im Wesentlichen gleich hoch. Die Summe der beiden Höhe ergibt der maximale Verstellbereich der Stützvorrichtung.

Vorzugsweise erstrecken sich der untere Gewindeabschnitt am unteren Fussteil sowie der obere Gewindeabschnitt am oberen Fussteil nur über einen Teilbereich der gesamten Höhe des jeweiligen Fussteils.

Vorzugsweise verfügt der Betätigungsabschnitt aussenseitig über radial zum mittleren Fussteil abstehende Nocken. Die Nocken sind vorzugsweise derart ausgebildet, dass diese eine Grösse aufweisen, welche von Hand gut ergriffen werden kann.

Vorzugsweise ist zwischen dem Verdrehsicherungselement und dem unteren Fussteil und/oder zwischen dem Verdrehsicherungselement und dem oberen Fussteil eine haptische Rückmeldungsstruktur vorhanden, welche dem Benutzer bei der Einstellbewegung eine haptische Rückmeldung bereitstellt. Die haptische Rückmeldungsstruktur ist beispielsweise eine gefederte Nocke, die in passende Öffnungen einragt, wobei die Nocke relativ zur Öffnung bewegbar ist und wobei bei jedem Durchstreifen der Nocke durch die Öffnung ein Klackgeräusch abgebbar ist.

Vorzugsweise weist das mittlere Fussteil ein Anschlagselement auf, welches in eine Anschlagsfläche am unteren Fussteil oder am oberen Fussteil anschlägt, wenn die maximale Ausfahrbewegung erreicht wird. Hierdurch kann sichergestellt werden, dass es bei der Einstellbewegung nicht zu einer Trennung des unteren bzw. oberen Fussteils vom mittleren Fussteil kommt.

Vorzugsweise weist das obere Fussteil im Bereich seiner Stützfläche aussenseitig eine Raststruktur auf, mit welcher das obere Fussteil mit einem Lagerprofil für ein Duschelement oder mit einem Duschelement verrastbar ist.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

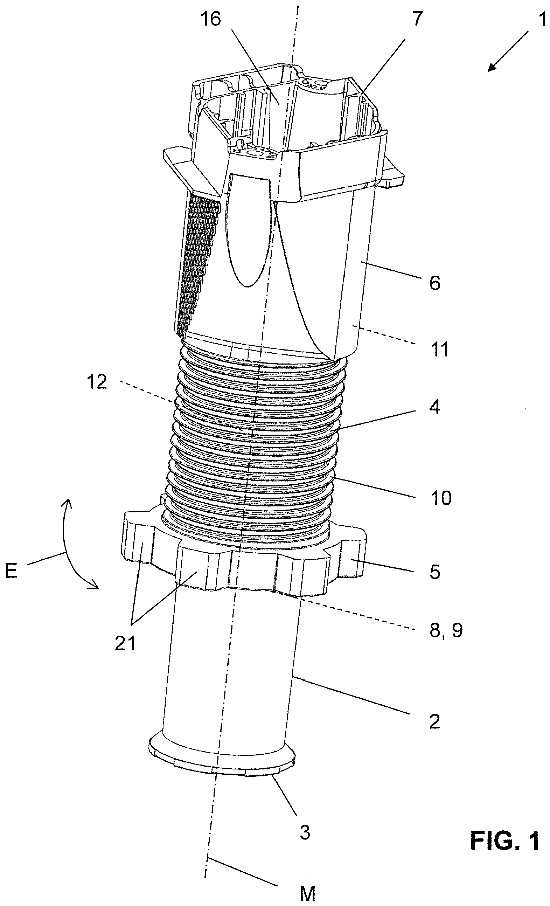

- Fig. 1: eine perspektivische Ansicht einer Stützvorrichtung für die Einstellung der Höhe eines Duschelementes nach einer Ausführungsform der vorliegenden Erfindung;

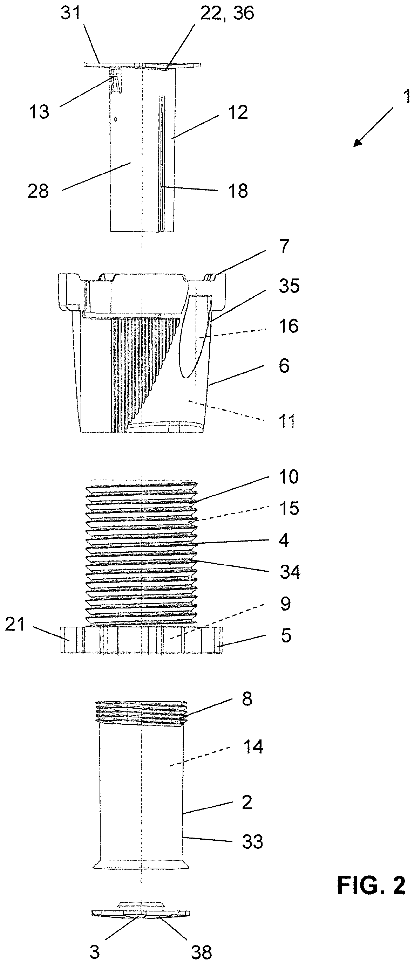

- Fig. 2: eine Explosionsdarstellung der Stützvorrichtung nach Figur 1;
- Fig. 3: eine geschnittene, perspektivische Ansicht der Stützvorrichtung nach Figur 1;
- Fig. 4: zwei Ansicht der Stützvorrichtung nach Figur 1 mit unterschiedlichen Höhen;
- Fig. 5: eine geschnittene, perspektivische Ansicht der Stützvorrichtung nach Figur 1 ohne das Verdrehsicherungselement; und
- Fig. 6: eine perspektivische Ansicht einer Anordnung umfassend eine Stützvorrichtung nach den vorhergehenden Figuren und ein Lagerprofil für ein Duschelement.

### BESCHREIBUNG BEVORZUGTER AUSFÜHRUNGSFORMEN

In den Figuren wird eine Stützvorrichtung 1 für die Einstellung der Höhe bzw. Lage eines Duschelementes und für die Abstützung des Duschelementes gezeigt. Die Stützvorrichtung 1 dient nicht nur der Einstellung der Höhe bzw. Lage sondern auch der anschliessenden Abstützung des Duschelementes.

Die Stützvorrichtung 1 umfasst ein unteres Fussteil 2 mit einer unteren Stützfläche 3, ein mittleres Fussteil 4 mit einem Betätigungsabschnitt 5 und ein oberes Fussteil 6 mit einer oberen Stützfläche 7. Die untere Stützfläche 3 steht in der Einbaulage mit einem Gebäudeboden in Kontakt. Auf der oberen Stützfläche 7 lagert das Duschelement. Die Lagerung kann indirekt, beispielsweise über ein Profil oder ein Rahmen oder dergleichen, oder direkt sein, wobei bei der direkten Lagerung das Duschelement direkt auf der oberen Stützfläche 7 aufliegt. Typischerweise sind mehrere Stützvorrichtungen 1 für ein Duschelement anzuordnen. Am unteren Fussteil 2 ist hier ein optionales Auflageelement 38 angeordnet, welches die untere Stützfläche 3 bereitstellt. Das Auflageelement 38 ist vorzugsweise aus Gummi oder einem anderen Material, welches dämpfende Eigenschaften aufweist.

Über den Betätigungsabschnitt 5 kann ein Sanitärinstallateur eine Einstellbewegung E auf die Stützvorrichtung 1 aufbringen, so dass der Abstand zwischen den beiden Stützflächen 3, 7 einstellbar wird. Bei der Einstellbewegung E wird das mittlere Fussteil 4 um die Mittelachse M verschwenkt. Der Abstand zwischen den beiden Stützflächen 3, 7, definiert die Höhe der Stützvorrichtung 1.

Das untere Fussteil 2 weist gegenüberliegend zur unteren Stützfläche 3 einen unteren Gewindeabschnitt 8 auf, welcher mit einem ersten Gewindeabschnitt 9 des mittleren Fussteils 4 im Eingriff ist. Der untere Gewindeabschnitt 8 ist als Aussengewinde und der erste Gewindeabschnitt 9 als Innengewinde ausgebildet.

Das obere Fussteil 6 weist gegenüberliegend zur oberen Stützfläche 7 einen oberen Gewindeabschnitt 10 auf, welcher mit einem zweiten Gewindeabschnitt 10 des mittleren Fussteils 4 im Eingriff ist. Der zweite Gewindeabschnitt 11 des mittleren Fussteils 4 ist ein Aussengewinde und der obere Gewindeabschnitt 10 ist ein Innengewinde.

Die Mittelachse M erstreckt sich mittig durch die Gewindeabschnitte 8, 9, 10, 11, welche jeweils konzentrisch zueinander angeordnet sind.

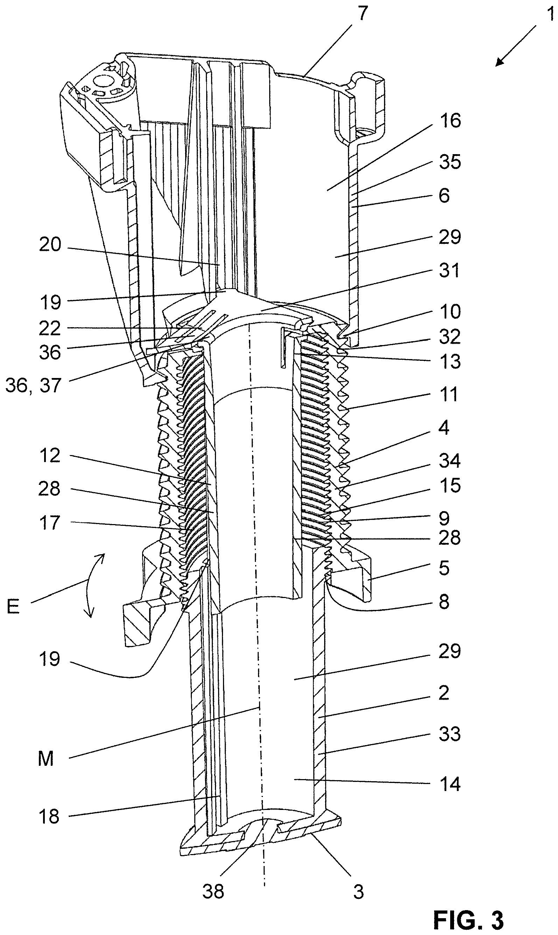

Der Eingriff der genannten Gewindeabschnitte 8, 9, 10, 11 wird in der Figur 3 genauer gezeigt. Aufgrund des Gewindeeingriffes zwischen den Fussteilen 2, 4, 6 lässt sich durch die Einstellbewegung E die Distanz zwischen der unteren Stützfläche 3 und der oberen Stützfläche 7 einstellen.

Die erwähnten Gewindeabschnitte 8, 9, 10, 11 erstrecken sich jeweils um eine gemeinsame Mittelachse M. Die Mittelachse M steht in Einbaulage in der Vertikalen und die Fussteile 2, 4, 6 bewegen sich bei der Einwirkung der Einstellbewegung E entlang der Mittelachse M. Das untere Fussteil 2 und das obere Fussteil 6 bewegen sich dabei ausschliesslich in Richtung der Mittelachse M. Das heisst, das untere Fussteil 2 und das obere Fussteil 6 bewegen sich im Wesentlichen geradlinig in Richtung der Mittelachse M. Das mittlere Fussteil wird um die Mittelachse M verschwenkt und bewegt sich auch in Richtung der Mittelachse M.

Weiter weist die Stützvorrichtung 1 ein Verdrehsicherungselement 12 auf. Das Verdrehsicherungselement 12 steht drehfest und längsverschieblich mit dem unteren Fussteil 2 in Kontakt. Weiter steht das Verdrehsicherungselement 12 ebenfalls drehfest und längsverschieblich mit dem oberen Fussteil 6 in Kontakt. Der drehfeste und längsverschiebliche Kontakt ist dabei derart, dass die Einstellbewegung E auf das mittlere Fussteil 4 über die genannten Gewindeeingriffe in einer Längsverschiebung entlang der Mittelachse M zwischen dem unteren Fussteil 2 und dem oberen Fussteil 6 resultiert. Bei einer Drehung auf das mittlere Fussteil 4 wird das untere Fussteil 2 und das obere Fussteil 6 durch das Verdrehsicherungselement 12 an einer Rotation verhindert und die Drehbewegung auf das mittlere Fussteil 4 resultiert aufgrund des Gewindeeingriffs und der beschriebenen Anordnung des Verdrehsicherungselementes 12 in eine Längsbewegung zwischen dem unteren Fussteil 2 und dem oberen Fussteil 6 entlang der Mittelachse M.

Das Verdrehsicherungselement 12 ist am mittleren Fussteil 5 gelagert. Die Lagerung ist derart ausgebildet, dass eine Verdrehung zwischen dem mittleren Fussteil 4 und dem Verdrehsicherungselement 12 möglich ist und dass eine Längsverschiebung zwischen dem mittleren Fussteil 4 und dem Verdrehsicherungselement 12 verunmöglicht wird. In der gezeigten Ausführungsform weist das Verdrehsicherungselement 12 eine Rastlasche 13 auf, welche beabstandet zu einem Anschlagsabschnitt 31 angeordnet ist. In den Zwischenraum zwischen Rastlasche 13 und Anschlagsabschnitt 31 ragt ein zirkular um die Mittelachse M umlaufender Flansch 32 des mittleren Fussteils 4 ein. Bei der Einstellbewegung E gleitet der Flansch 32 durch den Zwischenraum.

Die Ausbildung der Gewindeabschnitte 8, 9, 10, 11 ist im vorliegenden Fall derart, dass sich das untere Fussteil 2 und das obere Fussteil 6 jeweils gleichmässig relativ zum mittleren Fussteil 4 bewegen. Die Gewindeabschnitte 8, 9, 10, 11 zwischen dem unteren Fussteil 2 und dem mittleren Fussteil 4 und zwischen dem oberen Fussteil 6 und dem mittleren Fussteil 4 weisen die gleiche Steigung auf. Die Gewindeabschnitte 8, 9 und die Gewindeabschnitte 10, 11 sind aber gegengängig ausgebildet. Beispielsweise sind die Gewindeabschnitte 8, 9 als rechtsgängiges Gewinde und die Gewindeabschnitte 10, 11 als linksgängiges Gewinde ausgebildet.

Von der Figur 3 kann gut erkannt werden, dass jedes der Fussteile 2, 4, 6 einen entlang sich der Mittelachse M durch das jeweilige Fussteil 2, 4, 6 hindurch erstreckenden Hohlraum 14, 15, 16 aufweist. Das Verdrehsicherungselement 12 erstreckt sich vom Hohlraum 14 des unteren Fussteils 2 durch den Hohlraum 15 des mittleren Fussteils 4 und ragt dann in den Hohlraum 16 des oberen Fussteils 6 ein. Jeder der Hohlräume 14, 15, 16 wird jeweils durch eine mindestens teilweise zylindrisch ausgebildete Seitenwand 33, 34, 35 umgeben. In der gezeigten Ausführungsform ragt das untere Fussteil 2 in den Hohlraum 15 des mittleren Fussteils 4 ein und das mittlere Fussteil 4 ragt in den Hohlraum 16 des oberen Fussteils 6 ein. Es wird eine Art Teleskopstruktur geschaffen. Das untere Fussteil 2 ist relativ zum Hohlraum 15 des mittleren Fussteils 4 verschiebbar. Das mittlere Fussteil 4 ist relativ zum Hohlraum 16 des oberen Fussteils 6 verschiebbar.

Der untere Gewindeabschnitt 8 ist aussenseitig an der Seitenwand 33 angeordnet und der mit dem unteren Gewindeabschnitt 8 zusammenarbeitende erste Gewindeabschnitt 9 ist innenseitig an der Seitenwand 34 angeordnet. Der obere Gewindeabschnitt 10 ist innenseitig an der Seitenwand 35 angeordnet und der mit dem oberen Gewindeabschnitt 10 zusammenarbeitende zweite Gewindeabschnitt 11 ist aussenseitig an der Seitenwand 34 angeordnet.

In der gezeigten Ausführungsform weist das untere Fussteil 2 mindestens eine Längsführung 18 auf. In dieser Längsführung 18 greift ein Führungskamm 19 des Verdrehsicherungselementes 12 ein. Der Eingriff des Führungskammes 19 in die Längsführung 18 ist dabei derart, dass zwischen dem unteren Fussteil 2 und dem Verdrehsicherungselement 12 der drehfeste und längsverschiebliche Kontakt bereitstellbar ist. Gleichermassen weist das obere Fussteil 6 mindestens eine Längsführung 20 auf. Auch in diese Längsführung greift ein Führungskamm 39 des Verdrehsicherungselementes 12 derart ein, dass zwischen dem oberen Fussteil 6 und dem Verdrehsicherungselement 12 der drehfeste und längsverschiebliche Kontakt bereitstellbar ist. Die beiden Längsführungen 18 und 20 sind in die gleiche Richtung, nämlich in Richtung der Mittelachse M orientiert.

Die Längsführungen 18, 20 sind an eine dem jeweiligen Hohlraum 14, 16 zugewandten Fläche 29 der Seitenwand 33 bzw. 34 angeordnet.

In der gezeigten Ausführungsform erstreckt sich vom Anschlagsabschnitt 31 des Verdrehsicherungselementes 12 ein zylindrischer Abschnitt 28 vom Anschlagsabschnitt 31 weg. Am zylindrischen Abschnitt 28 ist die Längsführung 20 angeordnet, in welche der Führungskamm 19 eingreift. Zwischen dem ersten Gewindeabschnitt 9 und dem zylindrischen Abschnitt 28 ist ein Zwischenraum 17 vorhanden, in welche sich das untere Fussteil 2 hineinerstrecken kann. Der Zwischenraum 17 ist im Querschnitt gesehen ringförmig ausgebildet und der Bereich des unteren Fussteils 2, der in den Zwischenraum 17 einragt ist im Querschnitt gesehen ebenfalls zylindrisch ausgebildet.

Von der Figur 3 kann weiter erkannt werden, dass sich der erste Gewindeabschnitt 9 und der zweite Gewindeabschnitt 11 am mittleren Fussteil 4 im Wesentlichen über die gesamte Höhe des mittleren Fussteils 4 erstrecken. Der untere Gewindeabschnitt 8 am unteren Fussteil 2 und der obere Gewindeabschnitt 10 am oberen Fussteil 6 erstreckt sich nur über einen Teilbereich der gesamten Höhe des jeweiligen Fussteils.

Weiter ist, wie in der Figur 3 gezeigt, zwischen den Verdrehsicherungselement 12 und dem oberen Fussteil 6 eine haptische Rückmeldungsstruktur 22 vorhanden. In der gezeigten Ausführungsform ist die haptische Rückmeldungsstruktur 22 eine gefedert gelagerte Nocke 36, welche bei einer Verdrehung in entsprechende Ausnehmungen 37 eingreift. Bei einer Relativbewegung zwischen Nocke 36 und den Ausnehmungen 37 resultiert ein Klackgeräusch, welches der Sanitärinstallateur wahrnehmen kann.

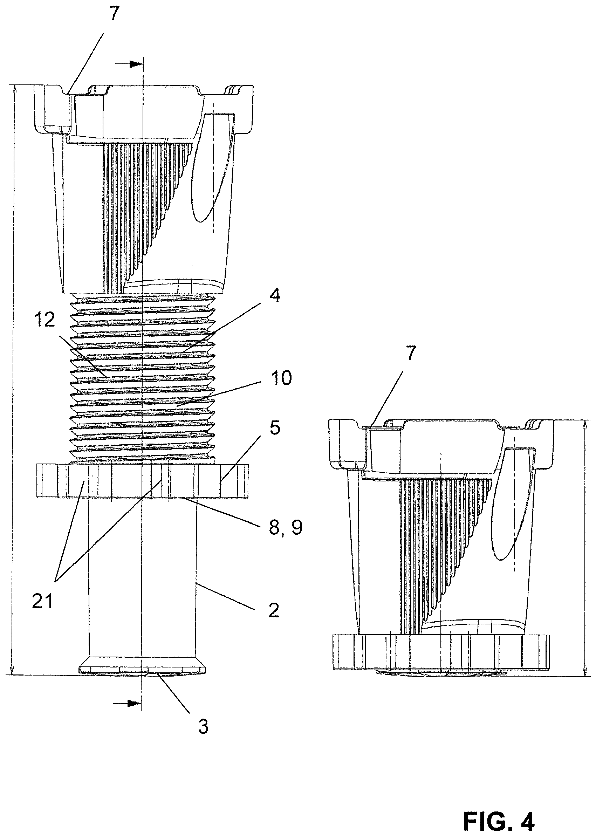

In der Figur 4 wird die Stützvorrichtung 1 einmal im vollständig ausgefahrenen Zustand (Darstellung links) und im vollständig eingefahrenen Zustand (Darstellung rechts) gezeigt.

Der Betätigungsabschnitt weist aussenseitig radial zum mittleren Fussteil 4 abstehende Nocken 21 auf. Über diese Nocken 21 kann der Betätigungsabschnitt 5 des mittleren Fussteils 4 einfach ergriffen werden.

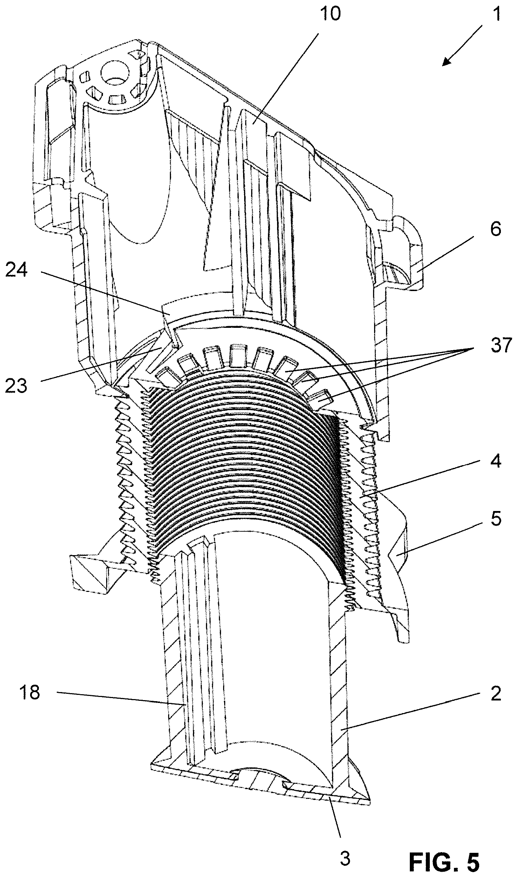

Weiter weist das mittlere Fussteil 4, wie in der Figur 5 gezeigt, ein Anschlagselement 23 auf. Das Anschlagselement 23 schlägt an einer Anschlagsfläche 24 am unteren Fussteil 2 oder am oberen Fussteil 6 an, wenn die maximale Ausfahrbewegung erreicht wird. Hierdurch wird verhindert, dass die Fussteile 2, 4, 6 soweit auseinandergedreht werden, bis diese voneinander getrennt werden. Von der Figur 5 sind im Weiteren die Öffnungen erkennbar, in welche die haptische Rückmeldungsstruktur 22 eingreift.

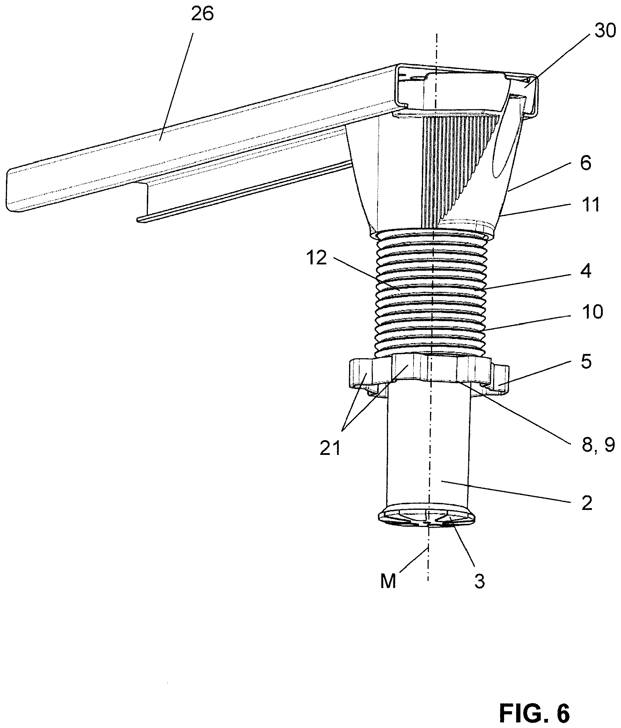

Die Figur 6 zeigt sodann eine Anordnung, welche eine Stützvorrichtung 1 gemäss obiger Beschreibung umfasst und welche weiterhin ein Lagerprofil 26 zur Lagerung eines nicht gezeigten Duschelementes aufweist. Das Lagerprofil 26 weist einen Aufnahmeraum 30 auf, in welche das obere Fussteil 6 eingerastet werden kann, sodass die obere Stützfläche 7 mit der Handfläche des Aufnahmeraums 30 in Kontakt bringbar ist.

**BEZUGSZEICHENLISTE**

| | | | |
|---|---|---|---|
| 1 | Stützvorrichtung | 28 | zylindrischer Abschnitt |
| 2 | unteres Fussteil | 29 | Fläche |
| 3 | untere Stützfläche | 30 | Aufnahmeraum |
| 4 | mittleres Fussteil | 31 | Anschlagsabschnitt |
| 5 | Betätigungsabschnitt | 32 | Flansch |
| 6 | oberes Fussteil | 33 | Seitenwand |
| 7 | obere Stützfläche | 34 | Seitenwand |
| 8 | unterer Gewindeabschnitt | 35 | Seitenwand |
| 9 | erster Gewindeabschnitt | 36 | gefederte Nocke |
| 10 | oberer Gewindeabschnitt | 37 | Ausnehmungen |
| 11 | zweiter Gewindeabschnitt | 38 | Auflageelement |
| 12 | Verdrehsicherungselement | 39 | Führungskamm |
| 13 | Rastlasche | E | Einstellbewegung |
| 14 | Hohlraum unteres Fussteil | M | Mittelachse |
| 15 | Hohlraum mittleres Fussteil | | |
| 16 | Hohlraum oberes Fussteil | | |
| 17 | Zwischenraum | | |
| 18 | Längsführung | | |
| 19 | Führungskamm | | |
| 20 | Längsführung | | |
| 21 | Nocken | | |
| 22 | haptische | | |
| | Rückmeldungsstruktur | | |
| 23 | Anschlagselement | | |
| 24 | Anschlagsfläche | | |
| 26 | Lagerprofil | | |

## Patentansprüche

1. Stützvorrichtung (1) für die Einstellung der Höhe eines Duschelementes und die Abstützung des Duschelementes umfassend,
ein unteres Fussteil (2) mit einer unteren Stützfläche (3),
ein mittleres Fussteil (4) mit einem Betätigungsabschnitt (5) und
ein oberes Fussteil (6) mit einer oberen Stützfläche (7),
wobei das untere Fussteil (2) gegenüberliegend zur unteren Stützfläche (3) ein unterer Gewindeabschnitt (8) aufweist, welcher mit einem ersten Gewindeabschnitt (9) des mittleren Fussteils (4) im Eingriff ist,
wobei das obere Fussteil (6) gegenüberliegend zur oberen Stützfläche (7) ein oberer Gewindeabschnitt (10) aufweist, welcher mit einem zweiten Gewindeabschnitt (11) des mittleren Fussteils (4) im Eingriff ist,
wobei das mittlere Fussteil (4) über den Betätigungsabschnitt (5) um seine Mittelachse (M) entlang einer Einstellbewegung (E) drehbar ist, **dadurch gekennzeichnet, dass** die Stützvorrichtung (1) weiterhin ein Verdrehsicherungselement (12) aufweist, welches drehfest und längsverschieblich mit dem unteren Fussteil (2) in Kontakt steht und welches drehfest und längsverschieblich mit dem oberen Fussteil (6) in Kontakt steht, derart, dass bei einer auf das mittlere Fussteil (4) wirkenden Einstellbewegung (E) über die genannten Gewindeabschnitte (8, 9, 10, 11) eine Längsverschiebung zwischen dem unteren Fussteil (2) und dem oberen Fussteil (6) entlang der Mittelachse (M) resultiert.

2. Stützvorrichtung (1) nach Anspruch 1, **dadurch gekennzeichnet, dass** das Verdrehsicherungselement (12) derart angeordnet ist, dass bei einer Einstellbewegung (E) des mittleren Fussteils (4), keine Drehbewegung auf das untere Fussteil (2) bzw. das obere Fussteil (6) resultiert.

3. Stützvorrichtung (1) nach Anspruch 1 oder 2, **dadurch gekennzeichnet, dass** das Verdrehsicherungselement (12) bezüglich einer Bewegung in Richtung der Mittelachse (M) fest und bezüglich einer Bewegung um die Mittelachse (M) bewegbar zum mittleren Fussteil (4) befestigt ist.

4. Stützvorrichtung (1) nach einem der vorhergehenden Ansprüche, **dadurch gekennzeichnet, dass** jedes der Fussteile (2, 4, 6) einen sich entlang der Mittelachse (M) durch das jeweilige Fussteil (2, 4, 6) hindurch erstreckenden Hohlraum (14, 15, 16) aufweist, wobei sich das Verdrehsicherungselement (12) vom Hohlraum (14) des unteren Fussteils (2) durch den Hohlraum (15) des mittleren Fussteils (15) in den Hohlraum (16) des oberen Fussteils (6) erstreckt.

5. Stützvorrichtung nach Anspruch 4, **dadurch gekennzeichnet, dass** jeder der Hohlräume (14, 15, 16) durch eine mindestens teilweise zylindrisch ausgebildete Seitenwand (33, 34, 35) umgeben ist, wobei die besagten Gewindeabschnitte (8, 9, 10, 11) an der Aussenseite bzw. an der dem Hohlraum (14, 15, 16) zugewandten Innenseite der Seitenwand (33, 34, 35) angeordnet sind.

6. Stützvorrichtung (1) nach Anspruch 4 oder 5, **dadurch gekennzeichnet, dass** das untere Fussteil (2) in den Hohlraum (15) des mittleren Fussteils (4) einragt und dass das mittlere Fussteil (4) in den Hohlraum (16) des oberen Fussteils (6) einragt und/oder dass zwischen dem mittleren Fussteil (4) und dem oberen Fussteil (6) ein Zwischenraum (17) vorhanden ist, in welchen das untere Fussteil (2) einragt.

7. Stützvorrichtung (1) nach einem der vorhergehenden Ansprüche, **dadurch gekennzeichnet,**
**dass** das untere Fussteil (2) mindestens eine Längsführung (18) aufweist, in welche ein Führungskamm (19) des Verdrehsicherungselements (12) derart eingreift, dass zwischen dem unteren Fussteil (2) und dem Verdrehsicherungselements (12) der drehfeste und längsverschiebliche Kontakt bereitstellbar ist und/oder
**dass** das obere Fussteil (6) mindestens eine Längsführung (20) aufweist, in welche ein Führungskamm (39) des Verdrehsicherungselements (12) derart eingreift, dass zwischen dem oberen Fussteil (6) und dem Verdrehsicherungselements (12) der drehfeste und längsverschiebliche Kontakt bereitstellbar ist.

8. Stützvorrichtung (1) nach Anspruch 7, **dadurch gekennzeichnet, dass** die mindestens eine Längsführung (18, 20) jeweils an bzw. in einer dem Hohlraum (14, 16) zugewandten Fläche (29) angeordnet ist.

9. Stützvorrichtung (1) nach einem der vorhergehenden Ansprüche, **dadurch gekennzeichnet, dass** der untere Gewindeabschnitt (8) des unteren Fussteils (2) und der erste Gewindeabschnitt (9) des mittleren Fussteils (4) als ein zum oberen Gewindeabschnitt (10) des oberen Fussteils (6) und dem zweiten Gewindeabschnitt (11) des mittleren Fussteils (4) gegen gängiges Gewinde ausgebildet ist.

10. Stützvorrichtung (1) nach einem der vorhergehenden Ansprüche, **dadurch gekennzeichnet, dass** sich der erste Gewindeabschnitt (9) und der zweite Gewindeabschnitt (11) am mittleren Fussteil (4) im Wesentlichen über die gesamte Höhe des mittleren Fussteils (4) erstrecken und/oder dass sich der untere Gewindeabschnitt (8) am unteren Fussteil (2) sowie der obere Gewindeabschnitt (10) am oberen Fussteil (6) nur über einen Teilbereich der gesamten Höhe des jeweiligen Fussteils (2, 6) erstrecken.

11. Stützvorrichtung (1) nach einem der vorhergehenden Ansprüche, **dadurch gekennzeichnet, dass** der Betätigungsabschnitt (5) aussenseitig über radial zum mittleren Fussteil (4) abstehende Nocken (21) verfügt.

12. Stützvorrichtung (1) nach einem der vorhergehenden Ansprüche, **dadurch gekennzeichnet, dass** zwischen dem Verdrehsicherungselement (12) und dem unteren Fussteil (2) und/oder zwischen dem Verdrehsicherungselement (12) und dem oberen Fussteil (6) eine haptische Rückmeldungsstruktur (22) vorhanden ist, welche dem Benutzer bei der Einstellbewegung (E) eine haptische Rückmeldung bereitstellt.

13. Stützvorrichtung (1) nach einem der vorhergehenden Ansprüche, **dadurch gekennzeichnet, dass** das mittlere Fussteil (4) ein Anschlagselement (23) aufweist, welches an einer Anschlagsfläche (24) am unteren Fussteil (2) oder am oberen Fussteil (6) anschlägt, wenn die maximale Ausfahrbewegung erreicht wird.

14. Stützvorrichtung (1) nach einem der vorhergehenden Ansprüche, **dadurch gekennzeichnet, dass** das obere Fussteil (6) im Bereich seiner Stützfläche (3) aussenseitig eine Raststruktur (25) aufweist, mit welcher das obere Fussteil (6) mit einem Lagerprofil (26) für ein Duschelement verrastbar ist.

15. Anordnung umfassend
- mindestens eine Stützvorrichtung (1) nach einem der vorhergehenden Ansprüche und ein Lagerprofil sowie ein auf dem Lagerprofil aufliegendes Duschelement, wobei die Stützvorrichtung mit dem oberen Fussteil am Lagerprofil befestigbar ist; oder
- mindestens eine Stützvorrichtung (1) nach einem der vorhergehenden Ansprüche und ein Duschelement, wobei die Stützvorrichtung mit dem oberen Fussteil am Duschelement befestigbar ist.

## Claims

1. Supporting device (1) for adjusting the height of a shower element and supporting the shower element, comprising
a lower foot part (2) with a lower supporting surface (3),
a central foot part (4) with an actuating portion (5), and
an upper foot part (6) with an upper supporting surface (7),
wherein the lower foot part (2), opposite to the lower supporting surface (3), has a lower threaded portion (8), which is in engagement with a first threaded portion (9) of the central foot part (4),
wherein the upper foot part (6), opposite to the upper supporting surface (7), has an upper threaded portion (10), which is in engagement with a second threaded portion (11) of the central foot part (4),
wherein the central foot part (4) can be rotated about its central axis (M), along the course of the adjustment movement (E), via the actuating portion (5),
**characterized in that** the supporting device (1) also has a rotation-prevention element (12), which is in rotationally fixed and longitudinally displaceable contact with the lower foot part (2) and which is in rotationally fixed and longitudinally displaceable contact with the upper foot part (6) such that, in the case of the central foot part (4) being subjected to an adjustment movement (E), the aforementioned threaded portions (8, 9, 10, 11) result in a longitudinal displacement between the lower foot part (2) and the upper foot part (6) along the central axis (M).

2. Supporting device (1) according to Claim 1, **characterized in that** the rotation-prevention element (12) is arranged such that, in the case of an adjustment movement (E) of the central foot part (4), the lower foot part (2) and the upper foot part (6) are not subjected to rotation.

3. Supporting device (1) according to Claim 1 or 2, **characterized in that** the rotation-prevention element (12) is fastened to the central foot part (4) in a fixed manner as far as movement in the direction of the central axis (M) is concerned and in a movable manner as far as movement about the central axis (M) is concerned.

4. Supporting device (1) according to one of the preceding claims, **characterized in that** each of the foot parts (2, 4, 6) has a cavity (14, 15, 16), which extends through the respective foot part (2, 4, 6) along the central axis (M), wherein the rotation-prevention element (12) extends from the cavity (14) of the lower foot part (2), through the cavity (15) of the central foot part (15), into the cavity (16) of the upper foot part (6).

5. Supporting device according to Claim 4, **characterized in that** each of the cavities (14, 15, 16) is enclosed by an at least partially cylindrical side wall (33, 34, 35), wherein the said threaded portions (8, 9, 10, 11) are arranged on the outer side or on the inner side of the side wall (33, 34, 35), the inner side being directed towards the cavity (14, 15, 16).

6. Supporting device (1) according to Claim 4 or 5, **characterized in that** the lower foot part (2) projects into the cavity (15) of the central foot part (4), and **in that** the central foot part (4) projects into the cavity (16) of the upper foot part (6), and/or **in that** an interspace (17) is present between the central foot part (4) and the upper foot part (6) and has the lower foot part (2) projecting into it.

7. Supporting device (1) according to one of the preceding claims, **characterized**
**in that** the lower foot part (2) has at least one longitudinal guide (18), in which a guide comb (19) of the rotation-prevention element (12) engages such that it is possible to provide the rotationally fixed and longitudinally displaceable contact between the lower foot part (2) and the rotation-prevention element (12), and/or
**in that** the upper foot part (6) has at least one longitudinal guide (20), in which a guide comb (39) of the rotation-prevention element (12) engages such that it is possible to provide the rotationally fixed and longitudinally displaceable contact between the upper foot part (6) and the rotation-prevention element (12).

8. Supporting device (1) according to Claim 7, **characterized in that** the at least one longitudinal guide (18, 20) is arranged in each case on or in a surface (29) which is directed towards the cavity (14, 16).

9. Supporting device (1) according to one of the preceding claims, **characterized in that** the lower threaded portion (8) of the lower foot part (2) and the first threaded portion (9) of the central foot part (4) are designed in the form of a thread which runs in an opposite direction in relation to that of the upper threaded portion (10) of the upper foot part (6) and that of the second threaded portion (11) of the central foot part (4).

10. Supporting device (1) according to one of the preceding claims, **characterized in that** the first threaded portion (9) and the second threaded portion (11) on the central foot part (4) extend essentially over the entire height of the central foot part (4), and/or **in that** the lower threaded portion (8) on the lower foot part (2) and also the upper threaded portion (10) on the upper foot part (6) extend only over part of the entire height of the respective part (2, 6).

11. Supporting device (1) according to one of the preceding claims, **characterized in that** the actuating portion (5) has, on its outside, protuberances (21) which project radially in relation to the central foot part (4).

12. Supporting device (1) according to one of the preceding claims, **characterized in that** a haptic feedback structure (22) is present between the rotation-prevention element (12) and the lower foot part (2), and/or between the rotation-prevention element (12) and the upper foot part (6), and provides the user with haptic feedback during the adjusting movement (E).

13. Supporting device (1) according to one of the preceding claims, **characterized in that** the central foot part (4) has a stop element (23), which strikes against a stop surface (24) on the lower foot part (2) or on the upper foot part (6) when the maximum extension movement is achieved.

14. Supporting device (1) according to one of the preceding claims, **characterized in that**, in the region of its supporting surface (3), the upper foot part (6) has, on its outside, a latching structure (25), by way of which the upper foot part (6) can be latched to a bearing profile (26) for a shower element.

15. Arrangement comprising
- at least one supporting device (1) according to one of the preceding claims and a bearing profile and also a shower element resting on the bearing profile, wherein the supporting device can be fastened on the bearing profile by way of the upper foot part; or
- at least one supporting device (1) according to one of the preceding claims and a shower element, wherein the supporting device can be fastened on the shower element by way of the upper foot part.

## Revendications

1. Dispositif de support (1) pour le réglage de la hauteur d'un élément de douche et le support de l'élément de douche, comprenant :
une partie de pied inférieure (2) munie d'une surface de support inférieure (3),
une partie de pied médiane (4) munie d'une section d'actionnement (5) et
une partie de pied supérieure (6) munie d'une surface de support supérieure (7),
la partie de pied inférieure (2) présentant, à l'opposé de la surface de support inférieure (3), une section filetée inférieure (8), qui est en prise avec une première section filetée (9) de la partie de pied médiane (4),
la partie de pied supérieure (6) présentant, à l'opposé de la surface de support supérieure (7), une section filetée supérieure (10), qui est en prise avec une deuxième section filetée (11) de la partie de pied médiane (4),
la partie de pied médiane (4) pouvant être tournée autour de son axe médian (M), par l'intermédiaire de la section d'actionnement (5), le long d'un mouvement de réglage (E), **caractérisé en ce que** le dispositif de support (1) présente en outre un élément de blocage en rotation (12), qui est en contact avec la partie de pied inférieure (2) de manière immobile en rotation et à déplacement longitudinal et qui est en contact avec la partie de pied supérieure (6) de manière immobile en rotation et à déplacement longitudinal, de telle sorte qu'un mouvement de réglage (E) agissant sur la partie de pied médiane (4) résulte en un déplacement longitudinal entre la partie de pied inférieure (2) et la partie de pied supérieure (6) le long de l'axe médian (M) par l'intermédiaire desdites sections filetées (8, 9, 10, 11).

2. Dispositif de support (1) selon la revendication 1, **caractérisé en ce que** l'élément de blocage en rotation (12) est agencé de telle sorte qu'un mouvement de réglage (E) de la partie de pied médiane (4) ne résulte en aucun mouvement de rotation de la partie de pied inférieure (2) ou de la partie de pied supérieure (6).

3. Dispositif de support (1) selon la revendication 1 ou 2, **caractérisé en ce que** l'élément de blocage en rotation (12) est fixé par rapport à la partie de pied médiane (4) de manière fixe au regard d'un mouvement dans la direction de l'axe médian (M) et de manière mobile au regard d'un mouvement autour de l'axe médian (M).

4. Dispositif de support (1) selon l'une quelconque des revendications précédentes, **caractérisé en ce que** chacune des parties de pied (2, 4, 6) présente une cavité (14, 15, 16) s'étendant le long de l'axe médian (M) à travers la partie de pied respective (2, 4, 6), l'élément de blocage en rotation (12) s'étendant depuis la cavité (14) de la partie de pied inférieure (2) à travers la cavité (15) de la partie de pied médiane (15) dans la cavité (16) de la partie de pied supérieure (6).

5. Dispositif de support selon la revendication 4, **caractérisé en ce que** chacune des cavités (14, 15, 16) est entourée par une paroi latérale (33, 34, 35) configurée au moins partiellement sous forme cylindrique, lesdites sections filetées (8, 9, 10, 11) étant agencées sur le côté extérieur ou sur le côté intérieur tourné vers la cavité (14, 15, 16) de la paroi latérale (33, 34, 35).

6. Dispositif de support (1) selon la revendication 4 ou 5, **caractérisé en ce que** la partie de pied inférieure (2) pénètre dans la cavité (15) de la partie de pied médiane (4) et **en ce que** la partie de pied médiane (4) pénètre dans la cavité (16) de la partie de pied supérieure (6) et/ou **en ce qu'**un espace intermédiaire (17) est présent entre la partie de pied médiane (4) et la partie de pied supérieure (6), dans lequel pénètre la partie de pied inférieure (2).

7. Dispositif de support (1) selon l'une quelconque des revendications précédentes, **caractérisé en ce que**
la partie de pied inférieure (2) présente au moins un guide longitudinal (18), dans lequel s'engage un peigne de guidage (19) de l'élément de blocage en rotation (12), de telle sorte que le contact immobile en rotation et à déplacement longitudinal peut être établi entre la partie de pied inférieure (2) et l'élément de blocage en rotation (12), et/ou
la partie de pied supérieure (6) présente au moins un guide longitudinal (20), dans lequel s'engage un peigne de guidage (39) de l'élément de blocage en rotation (12), de telle sorte que le contact immobile en rotation et à déplacement longitudinal peut être établi entre la partie de pied supérieure (6) et l'élément de blocage en rotation (12).

8. Dispositif de support (1) selon la revendication 7, **caractérisé en ce que** l'au moins un guide longitudinal (18, 20) est agencé respectivement sur ou dans une surface (29) tournée vers la cavité (14, 16).

9. Dispositif de support (1) selon l'une quelconque des revendications précédentes, **caractérisé en ce que** la section filetée inférieure (8) de la partie de pied inférieure (2) et la première section filetée (9) de la partie de pied médiane (4) sont configurées sous la forme d'un filetage opposé à la section filetée supérieure (10) de la partie de pied supérieure (6) et à la deuxième section filetée (11) de la partie de pied médiane (4).

10. Dispositif de support (1) selon l'une quelconque des revendications précédentes, **caractérisé en ce que** la première section filetée (9) et la deuxième section filetée (11) de la partie de pied médiane (4) s'étendent essentiellement sur la hauteur totale de la partie de pied médiane (4) et/ou **en ce que** la section filetée inférieure (8) de la partie de pied inférieure (2) ainsi que la section filetée supérieure (10) de la partie de pied supérieure (6) ne s'étendent que sur une zone partielle de la hauteur totale de la partie de pied respective (2, 6).

11. Dispositif de support (1) selon l'une quelconque des revendications précédentes, **caractérisé en ce que** la section d'actionnement (5) dispose, sur son côté extérieur, de cames (21) faisant saillie radialement par rapport à la partie de pied médiane (4).

12. Dispositif de support (1) selon l'une quelconque des revendications précédentes, **caractérisé en ce qu'**une structure de signalisation haptique (22) est présente entre l'élément de blocage en rotation (12) et la partie de pied inférieure (2) et/ou entre l'élément de blocage en rotation (12) et la partie de pied supérieure (6), qui fournit à l'utilisateur une signalisation haptique lors du mouvement de réglage (E).

13. Dispositif de support (1) selon l'une quelconque des revendications précédentes, **caractérisé en ce que** la partie de pied médiane (4) présente un élément de butée (23), qui vient buter contre une surface de butée (24) sur la partie de pied inférieure (2) ou sur la partie de pied supérieure (6) lorsque le mouvement de déploiement maximal est atteint.

14. Dispositif de support (1) selon l'une quelconque des revendications précédentes, **caractérisé en ce que** la partie de pied supérieure (6) présente, dans la zone de sa surface de support (3), du côté extérieur, une structure d'encliquetage (25) avec laquelle la partie de pied supérieure (6) peut être encliquetée avec un profil de palier (26) pour un élément de douche.

15. Agencement comprenant :
- au moins un dispositif de support (1) selon l'une quelconque des revendications précédentes et un profil de palier ainsi qu'un élément de douche reposant sur le profil de palier, le dispositif de support pouvant être fixé par la partie de pied supérieure au profil de palier ;
ou
- au moins un dispositif de support (1) selon l'une quelconque des revendications précédentes et un élément de douche, le dispositif de support pouvant être fixé par la partie de pied supérieure à l'élément de douche.
